# EUROPÄISCHE PATENTSCHRIFT

(11) **EP 0 888 656 B1**
(45) Veröffentlichungstag und Bekanntmachung des Hinweises auf die Patenterteilung: **17.08.2005**
(21) Anmeldenummer: 96945855.3
(22) Anmeldetag: 04.11.1996
(51) Int. Cl.: H02G 3/00

(54) **ABDECKPLATTE FÜR EINEN KABELKANAL**
COVER PLATE FOR A CABLE DUCT
PLAQUE DE RECOUVREMENT POUR UNE CONDUITE DE CABLES

(30) Priorität: 02.11.1995 DE 19540762
(43) Veröffentlichungstag der Anmeldung: 07.01.1999
(73) Patentinhaber: Heitzmann, Bruno, 67098 Bad Dürkheim (DE)
(72) Erfinder: Heitzmann, Bruno, 67098 Bad Dürkheim (DE)
(86) Internationale Anmeldenummer: PCT/DE1996/002090
(87) Internationale Veröffentlichungsnummer: WO 1997/016877

(56) Entgegenhaltungen:
- WO-A-94/01907
- DE-A- 2 601 641
- DE-U- 9 312 432
- DE-U- 29 518 181
- FR-A- 2 164 067

## Beschreibung

Die Erfindung betrifft eine Abdeckplatte für einen Kabalkanal gemäß dem Oberbegriff des Anspruches 1.

Solche Kabelkanäle, die z.B. an Bahntrassen, auf Flughäfen oder in Freiluftschaltanlagen vorhanden sind, müssen mit Abdeckplatten abgedeckt werden, die witterungsbeständig, begeh- und befahrbar sowie so schwer sind, daß sie z.B. wenn sie an Bahntrassen oder auf einem Flughafengelände verlegt sind, nicht vom Fahrwind eines Zuges oder der Abgasströmung eines Flugzeuges weggeblasen werden.

Bisher sind Kabelkanäle meist mit Betonplatten, Asbestzementplatten oder imprägnierten Holzplatten abgedeckt worden. Imprägniertes Holz verwittert trotz Imprägnierung schnell; es ist nach ca. 5 Jahren ohne Imprägnierung und nach 12 Jahren mit einer umweltschädlichen Imprägnierung verwittert. Wegen der Notwendigkeit einer Imprägnierung wird Holz kaum noch verwendet. Außerdem ist es bei Regenwetter auf der Oberfläche rutschig.

Betonplatten nehmen Wasser auf und werden daher nach ca. 12 Jahren ebenfalls brüchig, selbst wenn der Beton mit Eisen oder Glasfasern armiert ist. Besonders die Glasfaserarmierung bringt später Entsorgungsprobleme mit sich. Große Platten können nur mit einem Kran bewegt werden.

Asbestzementplatten werden wegen der bekannten Probleme der Asbestfaser nicht mehr eingesetzt.

Aus der DE-A 26 01 641 ist eine Abdeckplatte bekannt geworden, die sandwichartig aufgebaut ist und glasfaserverstärkten Kunststoff und/oder Rovings mit einer Schutzschicht aus Polyurethan oder PVC oder einem Polyester enthält. Damit die Oberfläche trittsicher ist, wird der Deckel mit einer in Kunstharz gebundenen Feinkiesschicht überzogen. Aufgrund ihrer Bauart ist die Abdeckplatte nicht recycelbar.

Aus der DE-43 07 260 ist eine Abdeckplatte aus thermoplastischem Kunststoff, z.B. aus Polyethylen, bekannt geworden, die am Kabelkanal mittels eines komplizierten Verschlußsystems befestigt werden muß. Diese Abdeckplarre kann nicht auf jeden Kanal aufgelegt werden. Wenn die Abdeckplatte so ausgebildet sein soll, daß sie - ggfls. ohne Verschluß - auf den Kabelkanal aufgelegt werden soll, dann soll Beton verwendet werden s. dort Anspruch 12.

Aufgabe der Erfindung ist es, eine Abdeckplatte der Eingangs genannten Art zu schaffen, die auf jeden Kabelkanal aufgelegt werden kann, ohne einen komplizierten Verschluß zu benötigen.

Diese Aufgabe wird bei einer gattungsgemäßen Abdeckplatte erfindungsgemäß gelöst durch die kennzeichnenden Merkmale des Anspruches 1.

Danach soll die Abdeckplatte aus schwerem witterungsbeständigen Kunststoff oder Kunststoffrecyclat oder einer geeigneten Kunststoffmischung bestehen und Armierungselemente aufweisen.

Da die Abdeckplatte gewichtsmäßig schwer ist, wird sie vom Zugfahrtwind oder dem Abgasstrom eines Flugzeuges nicht weggeblasen. Selbstverständlich ist es möglich, daß die Andeckplatte auch am Kabelkanal fixiert werden kann.

Sie kann massiv ohne oder mit Versteifungsleisten an ihrer Unterseite ausgebildet sein; die Versteifungsleisten können kreuzweise parallel zu den Seitenkanten oder diagonal auf der Unterseite der Abdeckplatte verlaufen. Selbstverständlich können Versteifungsleisten an der Unterseite auch an den Seitenkanten umlaufend angeordnet sein.

Zur Aufnahme der Armierungselemente kann wenigstens ein Aufnahmekanal vorgesehen sein, in dem das Armierungselement einrastbar oder mittels wenistens einer Halteklammerfeder festgehalten ist. Das Armierungselement liegt dabei mit seinen Enden auf den Simsen des Kabelkanals auf, auf dem die Abdeckplatte aufliegt. Es besteht auch die Möglichkeit, die Armierungselemente in die Abdeckplatte einzugießen oder einzuformen; dabei müssen Maßnahmen getroffen sein, damit Rißbildung aufgrund unterschiedlicher Wärmedehnungen von Armierungselement und Kunststoff vermieden wird.

Das Kunststoffmaterial, aus dem die Abdeckplatte hergestellt ist, besitzt eine gewisse Elastizität. Dadurch ist es sinnvoll, gemäß dem Anspruch 12 die Seitenkanten abzuschrägen und nach den Ansprüchen 13 und 14 die Seitenkanten bzw. Seitenflächen mit Erhebungen und Vertiefungen zu versehen. Damit wird der Halt der Abdeckplatte verbessert. In gleicher Weise können auch die Seitenflächenbereiche des Kabelkanals, die den Seitenflächen der Abdeckplatte benachbart sind, ausgebildet sein.

Als Material verwendet man einen witterungsbeständigen Kunststoff oder eine Kunststoffmischung, vorteilhaft Polyethylen, insbesondere LD-PE, da dieses low density Polyethylen besser formbar ist. Ggf. können Reststoffe vorhanden sein. Der Kunststoff wird mit Farbe gemischt und, wenn die Abdeckplatte im Freien verwendet werden soll, mit einem UV-Lichtschutz versehen. Besondere Hilfsmittel wie z. B. Krane werden zum Auflegen der Abdeckplatte auf den Kabelkanal nicht benötigt.

Weitere vorteilhafte Ausgestaltungen und Verbesserungen der Erfindung sind den weiteren Unteransprüchen zu entnehmen.

An Hand der Zeichnung, in der einige Ausführungsbeispiele dargestellt sind, sollen die Erfindung sowie weitere vorteilhafte Ausgestaltungen und Verbesserungen der Erfindung näher beschrieben und erläutert werden.

Es zeigen:
- Fig. 1: eine Schnittansicht durch einen Kabelkanal mit Abdeckplatte,
- Fig. 2: eine Aufsicht auf die Unterseite einer Adeckplatte, ohne Verstärkungsleiten,
- Fig. 3 bis 5: unterschiedliche Teilschnittansichten von Abdeckplatte und Kabelkanal,
- Fig. 6 und 7: zwei Ansichten auf eine Abdeckplatte, von unten,
- Fig. 8 und 9: zwei unterschiedliche Teilschnittansichten, zur Darstellung der Halterung eines Armierungselementes
- Fig. 10: unterschiedliche Stellungen der Montage zweier nebeneinanderliegender Abdeckplatten
- Fig. 11: eine Schnittansicht zweier miteinander verbundener Abdeckplatten,
- Fig. 12 und 13: Schnittansichten zur Darstellung der Fixierung einer Abdeckplatte auf einem Kabelkanal,
- Fig. 14: eine perspektivische Aufsicht auf eine Abdeckplatte mit Ausnehmungen und Armierungselementen,
- Fig. 15 und 16: eine perspektivische Ansicht der Abdeckplatte und Abdeckplatte mit Kabelkanal, der Ausführung ähnlich Fig. 5,
- Fig. 17: eine Schnittansicht der Abdeckplatte gemäß Fig. 15, und
- Fig. 18: eine Aufsicht auf eine Abdeckplatte mit Profilierung zur Erhöhung der Rutsch- und Trittsicherheit.

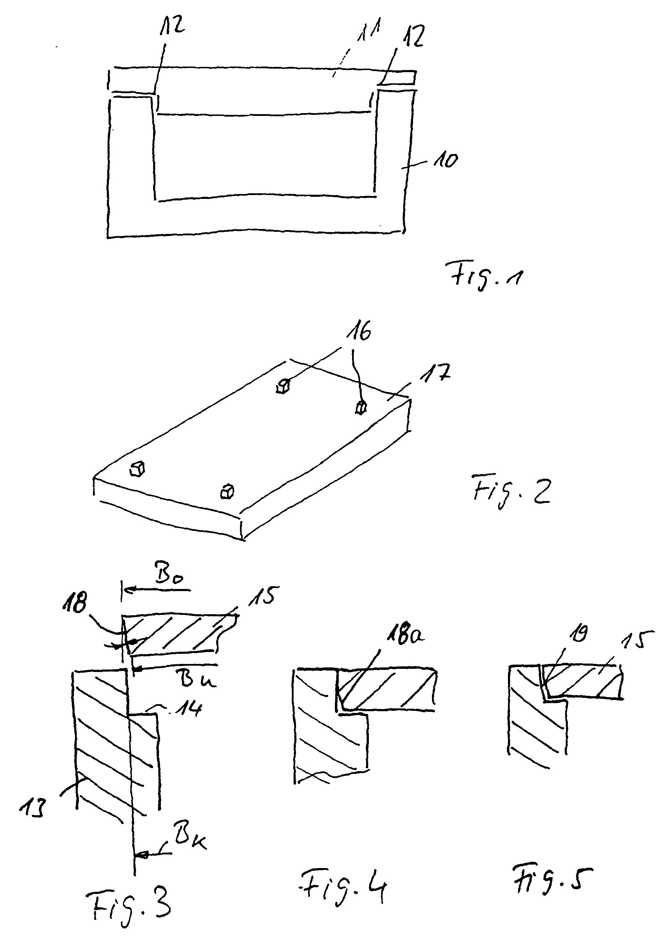

Auf einen Kabelkanal 10 ist eine Abdeckplatte 11 aufgelegt, die beiseitig je einen Rücksprung 12 aufweist, so daß zur Sicherung gegen Verschieben ein Teil der Abdeckplatte 11 in den Kabelkanal 10 ragt. Es besteht auch die Möglichkeit, daß der Kabelkanal 13 (s. Fig. 3) einen Sims 14 aufweist, auf den die Abdeckplatte 15 aufgelegt ist. Anstatt Rücksprünge 12 oder Simse 14 können auch Vorsprünge 16 an der Abdeckplatte 17 vorgesehen sein, die in den Kabelkanal 10 eingreifen und die Abdeckplatte 17 gegen Verschieben sichern. Anstatt solcher Vorsprünge 16 in Form von Zapfen können auch Leisten (nicht gezeigt) vorgesehen sein.

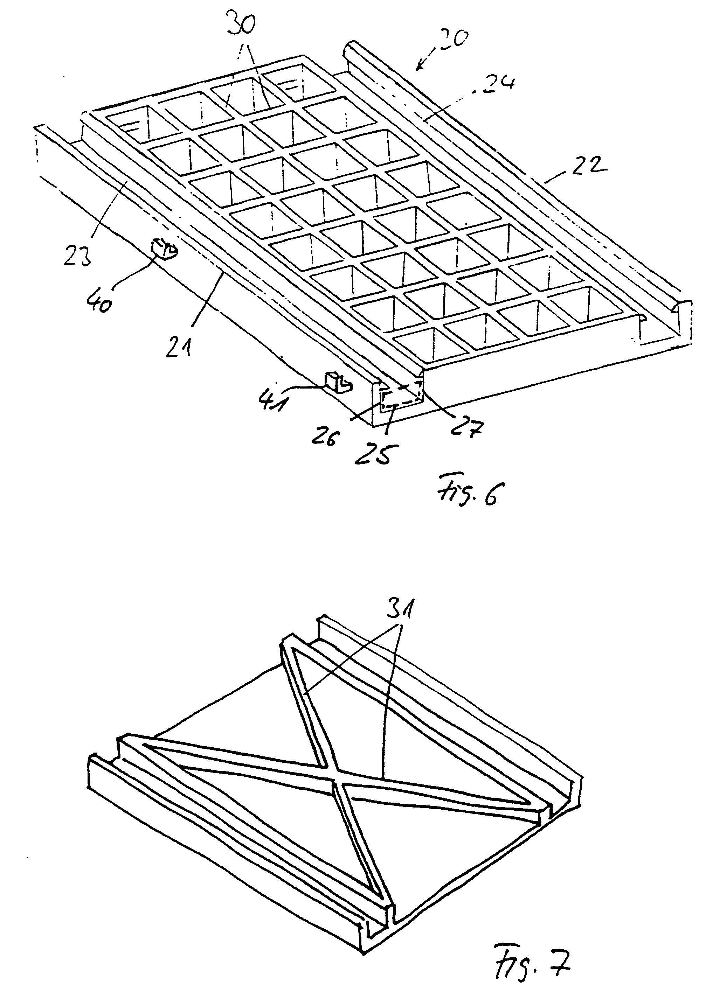

Aus Fig. 3 ist ersichtlich, daß die Seitenflächen 18 einen bestimmgen spitzen Winkel alpha mit der Vertikalen einnehmen, so daß die Breite Bo oben größer ist als die Breite Bu unten. Wenn der Abstand Bk der oberen Innenkanten ddes Kabelkanals geringfügig kleiner ist als die Breite Bo, dann verklemmt sich die Abdeckplatte zwischen den Seitenwänden des Kabelkanals, und ein Teilbereich 18a der Seitenflächen 18 liegt frei, Fig. 4. Die benachbarten Innenflächen 19 können auch der Schräge der Seitenflächen 18 der Abdeckplatte 15 angepaßt sein, siehe Fig. 5.

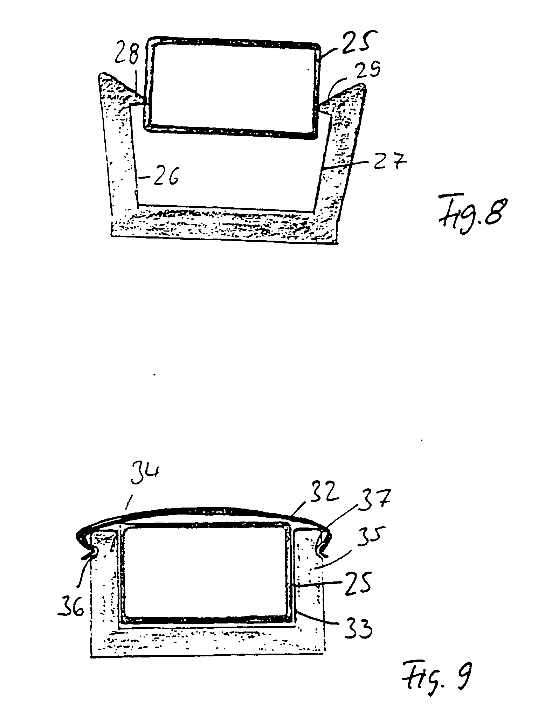

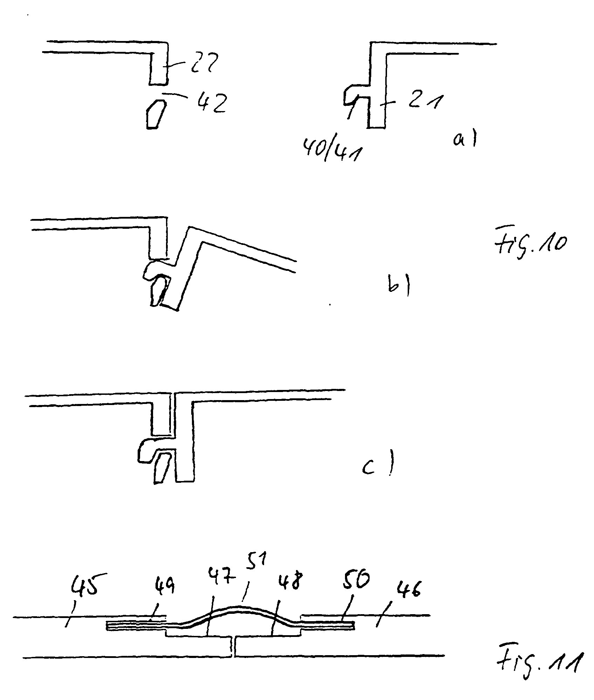

Die Unterseite einer Abdeckplatte 20 ist in der Fig. 6 dargestellt. Neben den Seitenflächen 21 und 22, die quer zur Erstreckung des Kabelkanals verläuft, befinden sich Aufnahmekanäle 23 und 24, in die ein Armierungselement 25 eingerastet oder darin fixiert ist, s. Fig. 8 und 9. Zur Verrastung besitzen die Aufnamekanäle 23 und 24 an ihren sich gegenüberliegenden Kanalwänden 26 und 27 Nasen 28,29, die das als Rechteckhohlprofil ausgebildete Armierungselement 25 nach dem Einsetzen hintergreifen. Die Fig. 8 zeigt das Armierungselement 25 beim Einsetzen. Zwischen den Aufnahmekanälen 23 und 24 befinden sich Verstärkungsleisten 30, die bei der Ausführung nach Fig. 6 kreuzförmig und parallel bzw. senkrecht zu den Seitenflächen 21,22 oder bei der Ausführung nach Fig. 7 diagonal verlaufen; diese letzteren besitzen die Bezugsziffer 31. Die Versteifungsleisten können zwecks Materialeinsparung vorgesehen sein.

Anstatt einzurasten kann das Armierungselement 25 mit wenigstens einer Klammerfeder 32 fixiert sein, die die den Aufnahmekanal 33 bzw. die den Aufnahmekanal bildenden Wände 34,35 übergreift und in Nuten 36 und 37 außen einrastet. Solche Federhalteklammern sind an sich bekannt.

An der Seitenfläche 21 befinden sich L-förmige Fortsätze 4o,41 und an der anderen Seitenfläche Schlitze 42. Aus der Bildfolge Fig. 10a,b und c erkennt man die Montagemöglichkeit zweier nebeneinander zu verlegenden Abdeckplatten: die Fortsätze 41,42 werden in die Schlitze 42 eingesteckt und danach sind die nebeneinanderliegenden Abdeckplatten, gegeneinander fixiert. Eine andere Fixierung zeigt Fig. 11. Dort besitzen zwei nebeneinanderliegende Abdeckplatten 45,46 je einen Rücksprung 47,48, deren aufeinanderzuweisende Wände einen Schlitz 49,50 aufweisen, der parallel zur Oberfläche der Abdeckplatten 45,46 verläuft und in den je ein Ende einer Fixierungsfeder 51 eingesteckt ist.

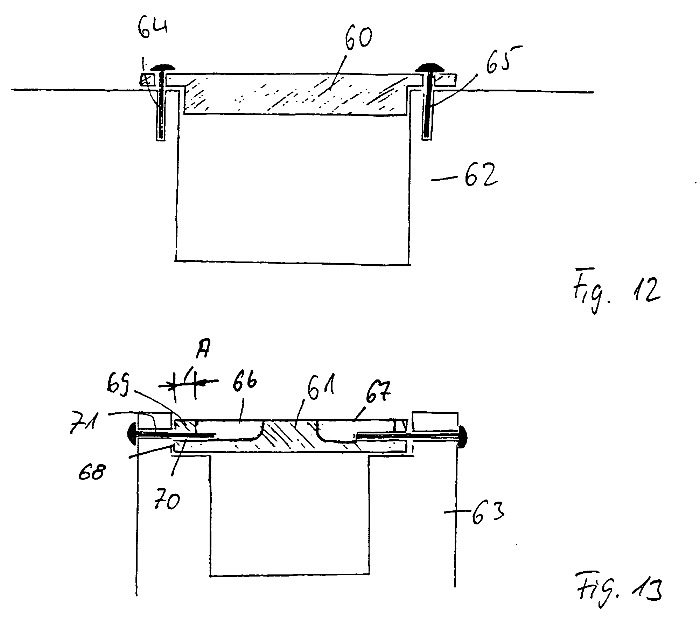

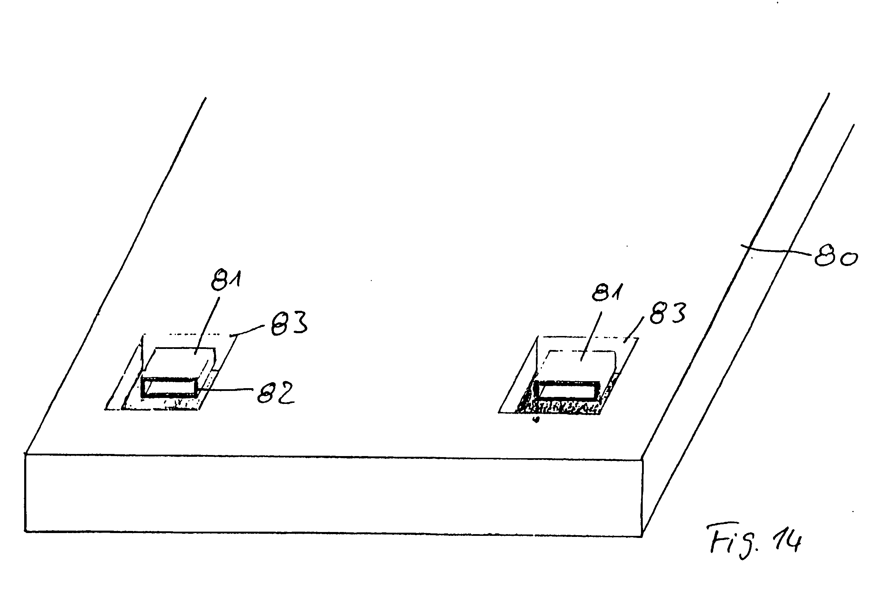

Die Fig. 12 und 13 zeigen Möglichkeiten zur Befestigung einer Abdeckplatte 60 oder 61 an einem schematisch dargestellten Kabelkanal 62,63. Die Abdeckplatte 60 ist mittels Schraubenbolzen 64 und 65 fixiert. Die Abdeckplatte 61 besitzt Ausnehmungen 66 und 67, die in einem Abstand A von der dem Kabalkanal 63 zugewandten Seitenfläche 68 enden. Dadurch wird eine Wandung 69 gebildet, die eine Bohrung 70 aufweist, durch die ein Schraubenbolzen 71 hindurchgesteckt werden kann. Die Befestigungsart nach Fig. 12 ist dann gegeben, wenn der Kabelkanal 62 ins Erdreich eingelassen ist; hier verlaufen die Schraubenbolzen quer zur Abdeckplatte 60. Beim Kabelkanal 63 verlaufen die Schraubenbolzen 71 parallel zur Abdeckplattenebene.

Anstatt die Armierungselemente in Ausnehmungen oder Aufnahmekanäle einzusetzen, können sie auch eingegossen sein.

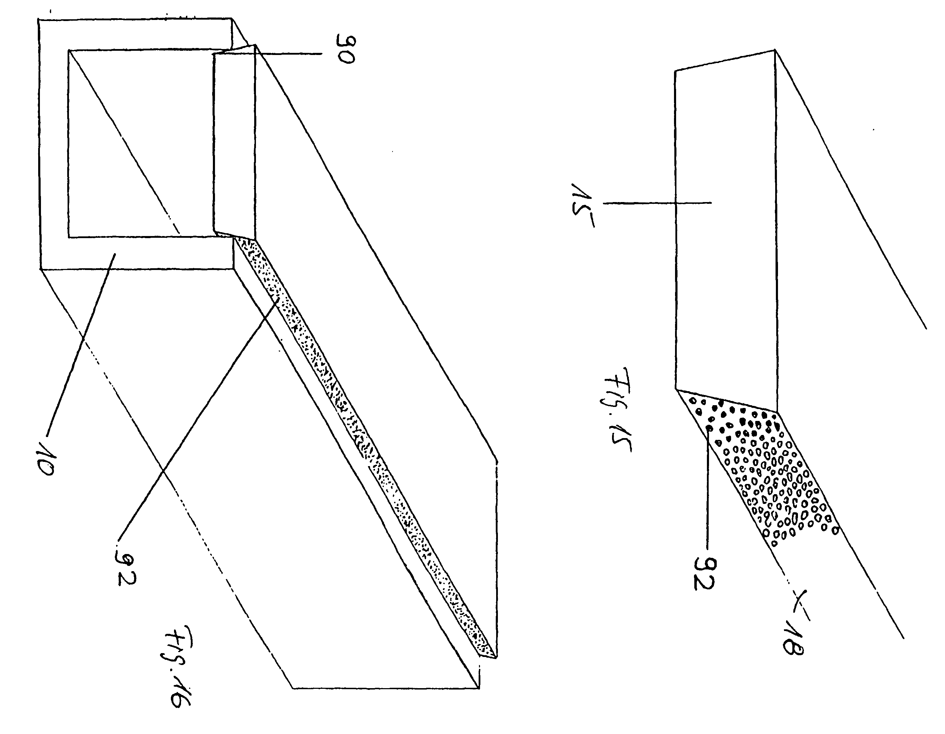

Die Abdeckplatte 80 besitzt eingegossene Armierungselemente 81 in Form von Rechthohlprofilen. Die Enden 82 der Armierungselemente 81 ragen in zu dem Betrachter zugewandten Unterseite eingebrachte Ausnehmungen 83 hinein und sind darin frei offen. Dies ist erforderlich, da sich wegen der unterschiedlichen Wärmeausdehnungskoeffizienten des Kunststoffes und des Werkstoffes, aus dem die Armierungselemente 81 hergestellt sind, Risse im Kunststoff ergeben würden. Die Ausnehmungen 83 sind in Fig. 14 viereckig dargestellt; es besteht auch die Möglichkeit, daß sie kreisförmig ausgestaltet sind. Die Ausnehmungen 83 werden mit nicht dargestellten Deckeln verschlossen, die unmittelbar nach dem Herausnehmen der noch warmen Abdeckplatte aus der Form in die Ausnehmungen eingesetzt werden und darin beim Abkühlen und Schrumpfen der Abdeckplatte verspannt werden. Eine zusätzliche Halterung und Fixierung der Deckel kann damit entfallen. Ausdehnungen quer zur Längserstreckung der Armierungselemente 81 sind weniger problematisch und es kommt dabei hinzu, daß die Armierungselemente 81 mit einer Ölschicht behaftet sind, die eine Trennung des Kunststoffes der Abdeckplatte 80 von den Seitenflächen der Armierungselemente 81 bewirkt. Der dadurch entstehende Zwischenraum reicht aus, die Wärmedehnungen quer zur Längserstreckung der Armierungselemente aufzufangen. Anstatt der Ölschicht könnten auch andere Trennmittel vorgesehen und angewendet werden.

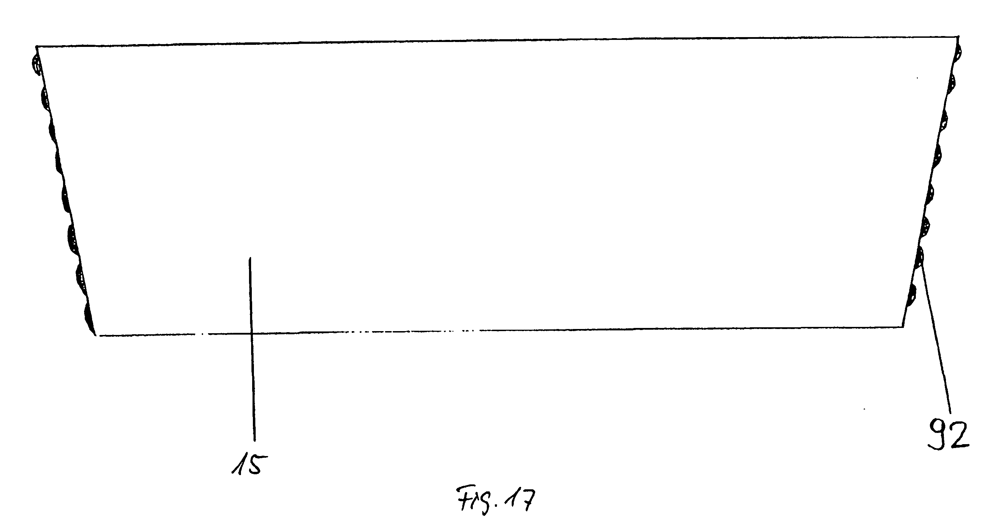

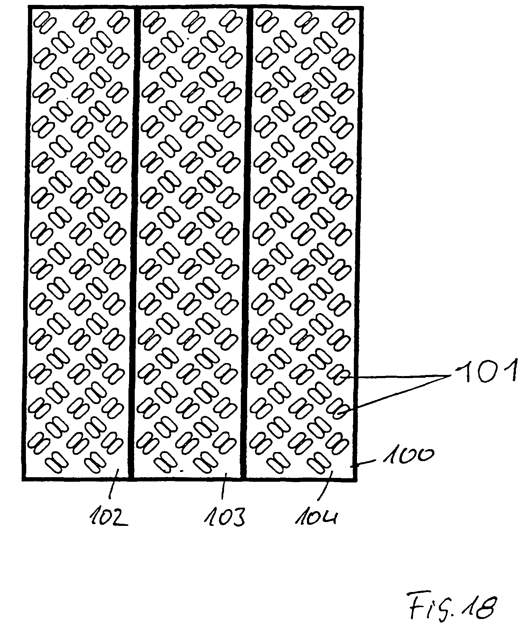

Die Fig. 15 zeigt die Abdeckplatte 15 in perspektivischer Darstellung. An den schräg verlaufenden Seitenflächen erkennt man Erhebungen 92 in unregelmäßiger Anordnung. Fig. 16 zeigt die Abdeckplatte 15 beim Einsetzvorgang in den Kabelkanal 10 ebenfalls in perspektivischer Darstellung, als Variante zu der Anordnung nach Fig. 3. Fig. 17 zeigt die Abdeckplatte 15 in Ansicht von vorn, mit den maßstäblich zu groß darstellten Erhebungen oder Mikronoppen 92.

Fig. 18 zeigt eine Aufsicht auf eine Abdeckplatte 100. Die sichtbare Oberfläche weist Abschnitte 102, 103 und 104 auf, in denen Noppenvorsprünge 101 paarweise kreuz und quer zueinander angeformt sind. Da in Hochspannungsschaltanlagen einzelne Komponenten wie z. B. ein Trennschalter, nur über begehbare oder befahrbare Kabelkanäle erreicht werden können, müssen die Abdeckplatten rutsch- und trittsicher ausgestaltet sein. Dies wird mit den riffelartig kreuzweise angeordneten Noppenvorsprüngen nach Fig. 18, aber auch durch jede andere Art einer Rauhigkeit erreicht.

Nachzutragen ist, daß die Armierungselemente nicht nur quer zur Längserstreckung des Kabelkanals angeordnet sind, sondern auch parallel dazu. Hierdurch wird eine Versteifung und Verwindungssicherheit erreicht, was jedenfalls dann erforderlich ist, wenn die Abdeckplatten begeh- oder befahrbar sein müssen. Welche Armierungselemente in welcher Anordnung und Ausrichtung bezogen auf die Längserstreckung des Kabelkanals erforderlich werden, hängt insbesondere von der Breite des Kabelkanals und von der Länge jeder Abdeckplatte, in Längsrichtung des Kabelkanals gemessen, ab. Die Armierungselemente können eingegossen oder einfach nur eingelegt bzw. eingerastet werden. Durch die Armierungselemente wird eine hohe Verwindungssteifigkeit erreicht, auch dann, wenn starke Temperaturschwankungen der Umgebung auftreten.

Die erfindungsgemäß Abdeckplatte kann massiv ohne Verstärkungsleisten auf ihrer Unterseite oder mit Verstärkungsleisten ausgebildet sein. Wie oben erwähnt, haben Verstärkungsleisten den Vorteil, daß mit Ihnen bei gleicher Festigkeit weniger Material verwendet werden kann.

## Patentansprüche

1. Abdeckplatte (11, 15, 17, 20, 45, 46, 60, 61, 80, 100) für einen insbesondere im Freien befindlichen Kabelkanal (10, 13, 62, 63) für Bahntrassen, Straßen, Tunnels, Freiluftanlagen, Umspannwerke oder Flughäfen und dgl., **dadurch gekennzeichnet, daß** sie aus witterungsbeständigem Kunststoff oder Kunststoffrecyclat oder einer Kunststoffmischung hergestellt ist, wobei der Kunststoff so schwer ist, daß die Abdeckplatte bei Verlegung an einer Bahntrasse vom Fahrwind eines Zuges nicht weggeblasen werden kann und daß zur Erhöhung der Steifigkeit und Erzielung einer Verwindungssteifigkeit Armierungselemente (25, 81) in die Abdeckplatte eingesetzt sind, die längs und/oder quer zur Kanalrichtung verlaufen.

2. Abdeckplatte nach Anspruch 1, **dadurch gekennzeichnet, daß** sie auf der Unterseite Versteifungsleisten (30, 31) aufweist.

3. Abdeckplatte nach Anspruch 2, **dadurch gekennzeichnet, daß** die Versteifungsleisten (30) kreuzweise parallel zu den Seitenkanten verlaufen.

4. Abdeckplatte nach Anspruch 2 oder 3,**dadurch gekennzeichnet, daß** die Versteifungsleisten (31) diagonal verlaufen.

5. Abdeckplatte nach einem der vorigen Ansprüche, **dadurch gekennzeichnet, daß** an der Unterseite wenigstens ein Aufnahmekanal (23, 24) für die Armierungselemente (25) vorgesehen ist, in welchen je ein Armierungselement (25) einsetzbar ist.

6. Abdeckplatte nach Anspruch 5, **dadurch gekennzeichnet, daß** das Armierungselement (25) in den Aufnahmekanal (23, 24) einrastbar ist.

7. Abdeckplatte nach Anspruch 4, **dadurch gekennzeichnet, daß** das Armierungselement (25) mittels wenigstens einer Halteklammerfeder (32) im Aufnahmekanal (33) festgehalten ist.

8. Abdeckplatte nach einem der Ansprüche 1 bis 4, **dadurch gekennzeichnet, daß** die Armierungselemente (81) in die Abdeckplatte (80) eingegossen sind.

9. Abdeckplatte nach Anspruch 8, **dadurch gekennzeichnet, daß** die Enden der Armierungselemente (81) frei in Hohlräume (83) hineinragen und darin frei vom Kunststoff sind.

10. Abdeckplatte nach Anspruch 9, **dadurch gekennzeichnet, daß** die Ausnehmungen oder Hohlräume (83) zur Unterseite der Abdeckplatte (80) offen und mittels eines Verschlußstückes verschließbar sind.

11. Abdeckplatte nach einem der Ansprüche 5 bis 10, **dadurch gekennzeichnet, daß** das Armierungselement (25, 81) ein Rechteckhohlprofil oder ein Doppel-T-Profil ist.

12. Abdeckplatte nach einem der vorigen Ansprüche, **dadurch gekennzeichnet, daß** ihre den Kanalwandungen benachbarten Seitenflächen (18) nach unten hin abgeschrägt sind, so daß die Breite quer zur Kanalerstreckung gemessen an der Oberseite größer ist als an der Unterseite (Bu).

13. Abdeckplatte nach Anspruch 12, **dadurch gekennzeichnet, daß** die Breite (B₀) an der Oberseite größer ist als der lichte Abstand (B_{K}) der benachbarten Seitenwände des Kabelkanals (13).

14. Abdeckplatte nach Anspruch 12 oder 13, **dadurch gekennzeichnet, daß** die abgeschrägten Seitenflächen (18) mit regelmäßig oder unregelmäßig angeordneten Erhebungen (92) und Vertiefungen vorzugsweise in dem Bereich von 1 bis 3 mm versehen sind.

15. Abdeckplatte nach Anspruch 14, **dadurch gekennzeichnet, daß** auch die benachbarten Seitenbereiche (19) des Kabalkanals abgeschrägt und ggfls. mit Erhebungen und Vertiefungen ausgebildet sind.

16. Abdeckplatte nach einem der vorherigen Ansprüche, **dadurch gekennzeichnet, daß** ihre Oberfläche rutschfest und trittsicher gestaltet ist.

17. Abdeckplatte nach Anspruch 16, **dadurch gekennzeichnet, daß** die Oberfläche mit einem Riffelprofil (101) versehen ist.

## Claims

1. A cover plate (11, 15, 17, 20, 45, 46, 60, 61, 80, 100) for a cable conduit (10, 13, 62, 63), which is particularly located in the open air, for rail routes, streets, tunnels, open-air facilities, transformer substations, airports and the like,
**characterized in that** it is manufactured from weather-resistant plastic or recycled plastic or a plastic mixture, the plastic being so heavy that the cover plate, if it is laid on a rail route, may not be blown away by the travel wind of a train, and, to elevate the rigidity and achieve a torsional rigidity, reinforcement elements (25, 81) are inserted into the cover plate, which run longitudinally and/or transversely to the conduit direction.

2. The cover plate according to Claim 1,
**characterized in that** it has stiffening strips (30, 31) on the bottom.

3. The cover plate according Claim 2,
**characterized in that** the stiffening strips (30) run crosswise parallel to the lateral edges.

4. The cover plate according to Claim 2 or 3,
**characterized in that** the stiffening strips (31) run diagonally.

5. The cover plate according to one of the preceding claims,
**characterized in that** at least one receiving channel (23, 24) is provided on the bottom for the reinforcement elements (25), into each of which a reinforcement element (25) may be inserted.

6. The cover plate according to Claim 5,
**characterized in that** the reinforcement element (25) may be snapped into the receiving channel (23, 24).

7. The cover plate according to Claim 4,
**characterized in that** the reinforcement element (25) is fixed in the receiving channel (33) using at least one retaining clip spring (32).

8. The cover plate according to one Claims 1 through 4,
**characterized in that** the reinforcement elements (81) are embedded in the cover plate (80).

9. The cover plate according to Claim 8,
**characterized in that** the ends of the reinforcement elements (81) project freely into cavities (83) and are free of plastic therein.

10. The cover plate according to Claim 9,
**characterized in that** the recesses or cavities (83) are open toward the bottom of the cover plate (80) and are closable using a closure part.

11. The cover plate according to one of Claims 5 through 10,
**characterized in that** the reinforcement element (25, 81) is a rectangular hollow profile or an I-shaped profile.

12. The cover plate according to one of the preceding claims,
**characterized in that** its lateral surfaces (18) neighboring the channel walls are beveled downward, so that the width, measured transversely to the channel extension, is larger at the top than at the bottom (Bu).

13. The cover plate according to Claim 12,
**characterized in that** the width (Bₒ) at the top is greater than the clearance (B_{K}) of the neighboring lateral walls of the cable conduit (13).

14. The cover plate according to Claim 12 or 13,
**characterized in that** the beveled lateral surfaces (18) are provided with regularly or irregularly positioned protrusions (92) and depressions, preferably in the range of 1 to 3 mm.

15. The cover plate according to Claim 14,
**characterized in that** the neighboring lateral surfaces (19) of the cable conduit are also beveled and possibly implemented having protrusions and depressions.

16. The cover plate according to one of the preceding claims,
**characterized in that** its surface is designed to be slip-proof and safe to step on.

17. The cover plate according to Claim 16,
**characterized in that** the surface is provided with a rippled profile (101).

## Revendications

1. Plaque de couverture (11, 15, 17, 20, 45, 46, 60, 61, 80, 100) pour un canal de câbles (10, 13, 62, 63), en particulier situé en plein air, pour des voies de chemin de fer, des routes, des tunnels, des installations en plein air, des sous-stations électriques ou des aéroports et similaires, **caractérisée en ce qu'**elle est fabriquée en plastique ou en plastique recyclé résistant aux intempéries ou dans un mélange de plastique, le plastique étant suffisamment lourd pour que la plaque de couverture ne puisse pas être déplacée, lorsqu'elle est posée sur une voie de chemin de fer, par le souffle du déplacement d'un train, et **en ce qu'**afin d'augmenter la rigidité et d'obtenir une rigidité en torsion, il est prévu dans la plaque de couverture des éléments d'armature (25, 81) qui sont orientés longitudinalement et/ou transversalement par rapport à l'orientation du canal.

2. Plaque de couverture selon la revendication 1, **caractérisée en ce qu'**elle possède sur sa face inférieure des bandes raidisseuses (30, 31).

3. Plaque de couverture selon la revendication 2, **caractérisée en ce que** les bandes raidisseuses (30) sont orientées en croix parallèlement aux bords latéraux.

4. Plaque de couverture selon la revendication 2 ou 3, **caractérisée en ce que** les bandes raidisseuses (31) sont orientées en diagonale.

5. Plaque de couverture selon l'une quelconque des revendications précédentes, **caractérisée en ce qu'**il est prévu sur la face inférieure au moins un canal de logement (23, 24) pour les éléments d'armature (25), un élément d'annature pouvant être inséré dans chaque canal (25).

6. Plaque de couverture selon la revendication 5, **caractérisée en ce que** l'élément d'armature (25) peut être emboîté dans le canal de logement (23, 24).

7. Plaque de couverture selon la revendication 4, **caractérisée en ce que** l'élément d'armature (25) est retenu dans le canal de logement (33) au moyen d'au moins un ressort de serrage de rétention (32).

8. Plaque de couverture selon l'une quelconque des revendications 1 à 4, **caractérisée en ce que** les éléments d'armature (81) sont inclus par coulée dans la plaque de couverture (80).

9. Plaque de couverture selon la revendication 8, **caractérisée en ce que** les extrémités des éléments d'armature (81) dépassent librement dans des cavités (83) et sont dégagées du plastique dans celles-ci.

10. Plaque de couverture selon la revendication 9, **caractérisée en ce que** les évidements ou cavités (83) sont ouverts vers la face inférieure de la plaque de couverture (80) et peuvent être fermés au moyen d'un élément obturateur.

11. Plaque de couverture selon l'une quelconque des revendications 5 à 10, **caractérisée en ce que** l'élément d'armature (25, 81) est un profilé creux rectangulaire ou un double profilé en T.

12. Plaque de couverture selon l'une quelconque des revendications précédentes, **caractérisée en ce que** ses surfaces latérales (18) voisines des parois du canal sont inclinées vers le bas, de sorte que la largeur mesurée perpendiculairement à l'étendue du canal est plus grande au sommet qu'au fond (Bu).

13. Plaque de couverture selon la revendication 12, **caractérisée en ce que** la largeur (B₀) au sommet est plus grande que la distance libre (B_{K}) entre les parois latérales voisines du canal de câble (13).

14. Plaque de couverture selon la revendication 12 ou 13, **caractérisée en ce que** les surfaces latérales (18) inclinées sont pourvues de saillies (92) et de renforcements disposés régulièrement ou inrégulièrement, de préférence de l'ordre de 1 à 3 mm.

15. Plaque de couverture selon la revendication 14, **caractérisée en ce que** les parties latérales voisines (19) du canal de câble sont elles aussi inclinées et éventuellement dotées de saillies et de renforcements.

16. Plaque de couverture selon l'une quelconque des revendications précédentes, **caractérisée en ce que** sa surface est conformée de façon à être antidérapante et résistante au passage.

17. Plaque de couverture selon la revendication 16, **caractérisée en ce que** la surface est dotée d'un profilage rainuré (101).
